# FASCICULE DE BREVET EUROPEEN

(11) **EP 2 850 342 B1**
(45) Date de publication et mention de la délivrance du brevet: **05.07.2017**
(21) Numéro de dépôt: 13725406.6
(22) Date de dépôt: 02.05.2013
(51) Int. Cl.: F16H 61/02, F16H 61/688

(54) **PROCÉDÉ ET DISPOSITIF DE CONTRÔLE D'UN MÉCANISME DE PRÉSÉLECTION DE VITESSE D'UNE BOÎTE DE VITESSES DE VÉHICULE, POUR LIMITER L'AMPLIFICATION DE FRÉQUENCES INDÉSIRABLES**
VERFAHREN UND VORRICHTUNG ZUR STEUERUNG EINES DREHZAHLVORWAHLMECHANISMUS EINES FAHRZEUGGETRIEBES ZUR BEGRENZUNG DER VERSTÄRKUNG UNERWÜNSCHTER FREQUENZEN
METHOD AND DEVICE FOR CONTROLLING A SPEED PRESELECTION MECHANISM OF A VEHICLE GEARBOX SO AS TO LIMIT THE AMPLIFICATION OF UNDESIRABLE FREQUENCIES

(30) Priorité: 16.05.2012 FR 1254473
(43) Date de publication de la demande: 25.03.2015
(73) Titulaire: Peugeot Citroën Automobiles SA, 78140 Vélizy Villacoublay (FR)
(72) Inventeur: BALENGHIEN, Olivier, F-93340 Le Raincy (FR); BOCQUET, Jean Sebastien, F-60280 Margny Les Compiegne (FR)
(74) Mandataire: Rosenberg, Muriel Sylvie
(86) Numéro de dépôt international: PCT/FR2013/050966
(87) Numéro de publication internationale: WO 2013/171400

(56) Documents cités:
- EP-A1- 1 950 469
- DE-A1- 10 308 698
- DE-A1-102006 008 207
- DE-A1-102011 079 830

## Description

L'invention concerne les véhicules équipés d'un groupe motopropulseur comportant une boîte de vitesses à mécanisme de présélection de vitesse.

On entend ici par « boîte de vitesses à mécanisme de présélection de vitesse » une boîte de vitesses permettant simultanément de sélectionner une première vitesse pour déplacer un véhicule et de présélectionner une seconde vitesse, par anticipation, afin de faciliter un prochain changement de vitesse. Par conséquent, l'invention concerne au moins les boîtes de vitesses à double embrayage (ou DCT pour « Double Clutch Transmission »).

Le groupe motopropulseur d'un véhicule génère des bruits et/ou des vibrations dont la fréquence varie en fonction de son mode de fonctionnement et donc du régime. Par exemple, de tels bruits et/ou vibrations peuvent être induits par l'acyclisme du moteur thermique du groupe motopropulseur, ou le « broutement » de l'embrayage résultant d'un défaut du mécanisme d'embrayage et d'un défaut de la friction d'embrayage. Ils peuvent se caractériser, par exemple, par un bourdonnement (typiquement à des régimes compris entre environ 1000 tours / minute et environ 1500 tours / minute) ou un niveau de grenaille de la boîte de vitesses (typiquement à des régimes compris entre environ 1500 tours / minute et environ 2000 tours / minute).

Hélas, comme le sait l'homme de l'art, certaines fréquences de ces bruits et/ou vibrations peuvent faire l'objet d'une amplification modale par un équipement d'un véhicule et devenir gênantes pour les passagers de ce dernier. C'est notamment le cas de certains modes fréquentiels de fonctionnement de certaines boîtes de vitesses (qui correspondent à certains régimes), du fait de leur grande proximité de certaines fréquences indésirables qui sont générées par les groupes motopropulseur.

Afin de réduire la gêne occasionnée par ces fréquences indésirables, il a été proposé de modifier l'équipement qui les génère et/ou d'adjoindre au véhicule des moyens d'amortissement acoustique. Mais cette solution s'avère souvent onéreuse ou très difficile à mettre en oeuvre. Un procédé et une méthode de contrôle présentant les caractéristiques du préambule des revendications 1 et 4 sont d'autre part connus de DE 103 08 698 A1. L'invention a donc pour but d'améliorer la situation en s'attaquant à la source de l'amplification d'une fréquence indésirable plutôt qu'à la source de cette fréquence indésirable.

Elle propose notamment à cet effet un procédé de contrôle, destiné à être mis en oeuvre dans un véhicule à groupe motopropulseur comportant une boîte de vitesses à mécanisme de présélection de vitesse et présentant un mode fréquentiel de fonctionnement variable, et consistant, lorsque le groupe motopropulseur génère une fréquence indésirable amplifiée par un mode fréquentiel en cours de la boîte de vitesses, à modifier le fonctionnement du mécanisme de présélection de vitesse afin de déplacer le mode fréquentiel en cours et en ce que l'on effectue une comparaison entre une estimée d'un niveau d'amplification de ladite fréquence indésirable et un seuil choisi, et l'on modifie le fonctionnement dudit mécanisme de présélection de vitesse lorsque ladite estimée est supérieure audit seuil choisi. En modifiant ainsi le fonctionnement du mécanisme de présélection de vitesse, on modifie l'inertie de rotation de la boîte de vitesses, vue par le moteur thermique, ce qui permet de déplacer le mode fréquentiel en cours de cette dernière pour qu'il soit éloigné de la fréquence indésirable et donc qu'il contribue notablement moins à l'amplification de cette dernière.

Le procédé de contrôle selon l'invention peut comporter d'autres caractéristiques qui peuvent être prises séparément ou en combinaison, et notamment :
- la modification peut consister soit en une présélection d'une vitesse choisie par le mécanisme de présélection de vitesse lorsqu'aucune vitesse n'est présélectionnée par ce mécanisme de présélection de vitesse, soit en un changement de vitesse présélectionnée si une première vitesse est déjà présélectionnée par ce mécanisme de présélection de vitesse ;
- en présence d'une première vitesse présélectionnée différente de la marche arrière, on peut présélectionner une seconde vitesse qui est choisie parmi (au moins) une vitesse inférieure à la première vitesse présélectionnée, une vitesse supérieure à la première vitesse présélectionnée, et la marche arrière.

L'invention propose également un dispositif de contrôle, destiné à équiper un véhicule à groupe motopropulseur comportant une boîte de vitesses à mécanisme de présélection de vitesse et présentant un mode fréquentiel de fonctionnement variable, et comprenant des moyens de contrôle agencés, en cas de génération par le groupe motopropulseur d'une fréquence indésirable amplifiée par un mode fréquentiel en cours de la boîte de vitesses, pour déclencher une modification du fonctionnement du mécanisme de présélection de vitesse afin de déplacer ce mode fréquentiel en cours et en ce que lesdits moyens de contrôle sont agencés pour modifier le fonctionnement dudit mécanisme de présélection de vitesse lorsqu'une estimée d'un niveau d'amplification de ladite fréquence indésirable est supérieure à un seuil choisi. Le dispositif de contrôle selon l'invention peut comporter d'autres caractéristiques qui peuvent être prises séparément ou en combinaison, et notamment :
- ses moyens de contrôle peuvent être agencés pour déclencher soit une présélection d'une vitesse choisie par le mécanisme de présélection de vitesse lorsqu'aucune vitesse n'est présélectionnée par ce mécanisme de présélection de vitesse, soit une présélection d'une seconde vitesse choisie par le mécanisme de présélection de vitesse lorsqu'une première vitesse est déjà présélectionnée par ce mécanisme de présélection de vitesse.

L'invention propose également un véhicule, éventuellement de type automobile, et comprenant un groupe motopropulseur, comportant une boîte de vitesses à mécanisme de présélection de vitesse et présentant un mode fréquentiel de fonctionnement variable, et un dispositif de contrôle du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement un véhicule comprenant un groupe motopropulseur et un superviseur de boîte de vitesses équipé d'un dispositif de contrôle selon l'invention,
- la figure 2 illustre un premier exemple d'algorithme permettant la mise en oeuvre d'un procédé de contrôle selon l'invention, et
- la figure 3 illustre un second exemple d'algorithme permettant la mise en oeuvre d'un procédé de contrôle selon l'invention.

L'invention a notamment pour but de proposer un procédé de contrôle, et un dispositif de contrôle D associé, destinés à contrôler le fonctionnement d'un mécanisme de présélection de vitesse MP d'une boîte de vitesses BV d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre ou maritime (ou fluvial) ou encore aéronautique, disposant d'un groupe motopropulseur, qui comprend éventuellement un moteur électrique couplé à des moyens de stockage d'énergie.

Par ailleurs, on considère dans ce qui suit, à titre d'exemple non limitatif, que le groupe motopropulseur comprend une boîte de vitesses BV de type dit à double embrayage (ou DCT). Mais l'invention n'est pas limitée à ce type de boîte de vitesses. Elle concerne en effet tout type de boîte de vitesses comprenant un mécanisme de présélection de vitesse MP.

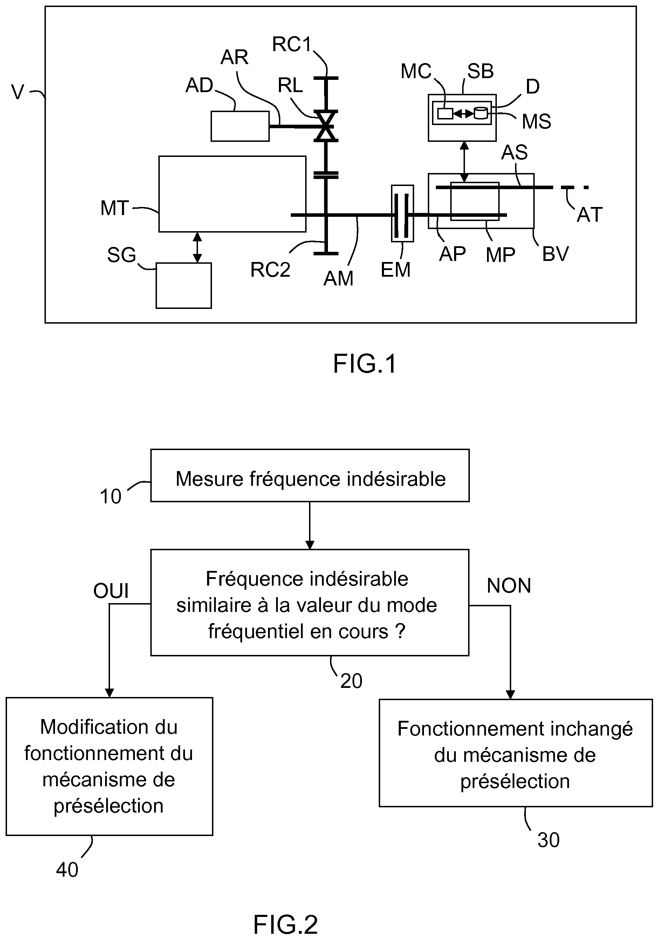

On a schématiquement représenté sur la figure 1 un véhicule V comprenant un groupe motopropulseur, un premier superviseur SG propre à superviser le fonctionnement du groupe motopropulseur, un second superviseur SB propre à superviser le fonctionnement de la boîte de vitesses BV, et un dispositif de contrôle D selon l'invention.

Comme illustré, le groupe motopropulseur comprend au moins un moteur thermique MT, un arbre moteur AM, une boite de vitesses BV (ici à double embrayage et à mécanisme de présélection de vitesse MP), et un embrayage EM.

Le moteur thermique MT comprend un vilebrequin (non représenté) qui est solidarisé fixement à l'arbre moteur AM afin d'entraîner ce dernier (AM) en rotation.

La boîte de vitesses BV comprend notamment un arbre d'entrée (ou primaire) AP et un arbre de sortie AS destinés à être couplés l'un à l'autre. L'arbre d'entrée AP est destiné à recevoir le couple moteur via l'embrayage EM. L'arbre de sortie AS est destiné à recevoir le couple moteur via l'arbre d'entrée AP et le mécanisme de présélection de vitesse MP, afin de le communiquer à l'arbre de transmission AT auquel il est couplé.

On notera que dans l'exemple non limitatif illustré sur la figure 1, le groupe motopropulseur comprend également une machine électrique AD qui constitue, par exemple, un alterno-démarreur chargé notamment de lancer le moteur thermique MT afin de lui permettre de démarrer, y compris en présence d'un système de contrôle d'arrêt et de redémarrage automatique (ou « stop and start »). Cet alterno-démarreur AD est chargé d'entraîner en rotation un arbre de rotor (ou d'induit) AR qui est ici solidarisé à une roue libre RL destinée à être couplée sur ordre à un pignon ou une roue de couplage RC1 qui engrène de façon permanente un autre pignon ou une autre roue de couplage RC2 solidarisé(e) fixement à l'arbre moteur AM.

Les fonctionnements du moteur thermique MT et de l'alterno-démarreur AD sont contrôlés par le premier superviseur SG qui peut se présenter sous la forme d'un calculateur (de préférence dédié).

Le fonctionnement de la boîte de vitesses BV est contrôlé par le second superviseur SB qui peut se présenter sous la forme d'un calculateur (de préférence dédié).

On considère dans ce qui suit que le groupe motopropulseur génère des bruits et/ou des vibrations dont la fréquence varie en fonction de son mode de fonctionnement (et donc du régime en cours). Ces bruits et/ou vibrations sont induits, par exemple, par l'acyclisme du moteur thermique MT ou le « broutement » de l'embrayage EM qui résulte d'un défaut du mécanisme d'embrayage et d'un défaut de la friction d'embrayage. On considère également dans ce qui suit que la boîte de vitesses BV présente différents modes fréquentiels (correspondant à différents régimes) selon son mode de fonctionnement en cours, et que l'un au moins de ces modes fréquentiels est très proche de l'une au moins des fréquences qui sont générées par le groupe motopropulseur, et donc de nature à induire son amplification, ce qui peut s'avérer gênant pour les passagers du véhicule V.

L'invention propose donc de mettre en oeuvre un procédé de contrôle destiné à réduire notablement le phénomène d'amplification précité.

Ce procédé de contrôle consiste, lorsque le groupe motopropulseur génère une fréquence indésirable qui est amplifiée (ou susceptible d'être amplifiée) par le mode fréquentiel en cours de la boîte de vitesses BV, à modifier le fonctionnement du mécanisme de présélection de vitesse MP afin de déplacer ce mode fréquentiel en cours.

Cette modification du fonctionnement du mécanisme de présélection de vitesse MP induit une modification de l'inertie de rotation de la boîte de vitesses BV, vue par le moteur thermique MT, ce qui déplace son mode fréquentiel en cours et donc permet de l'éloigner de la fréquence indésirable générée par le groupe motopropulseur. On comprendra que cet éloignement fréquentiel permet de réduire très sensiblement l'amplification de la fréquence indésirable par la boîte de vitesses BV, afin que cette fréquence indésirable ne constitue plus une gêne pour les passagers du véhicule V. Le procédé agit donc sur la source de l'amplification de la fréquence indésirable et non sur la source de cette fréquence indésirable. Cependant, il peut être utilisé en parallèle de moyens d'amortissement acoustique destinés à réduire les bruits et/ou vibrations du groupe motopropulseur qui présentent cette fréquence indésirable.

On notera que ce procédé de contrôle peut être mis en oeuvre par un dispositif de contrôle D qui est chargé de contrôler le fonctionnement du mécanisme de présélection de vitesse MP. Dans l'exemple illustré non limitativement sur la figure 1, le dispositif de contrôle D est implanté dans le second superviseur SB. Mais dans une variante le dispositif de contrôle D pourrait être un équipement externe au second superviseur SB, mais couplé à ce dernier (SB). Par conséquent, le dispositif de contrôle D peut être réalisé sous la forme de modules logiciels (ou informatiques ou encore « software »), ou bien d'une combinaison de circuits électroniques (ou « hardware ») et de modules logiciels.

De préférence, la modification du fonctionnement du mécanisme de présélection de vitesse MP consiste soit à le faire passer d'un mode dit « sans présélection » à un mode dit « avec présélection » (ou en d'autres termes à lui faire présélectionner une vitesse choisie lorsqu'il n'en présélectionne pas), soit à le faire passer d'un premier mode avec présélection à un second mode avec présélection (ou en d'autres termes à lui faire présélectionner une seconde vitesse choisie lorsqu'il présélectionne une première vitesse).

Dans la première alternative, lorsque la marche arrière est enclenchée, la vitesse présélectionnée qui doit être choisie par le dispositif de contrôle D est a priori la première vitesse, et lorsque l'une des vitesses (de marche avant) est enclenchée, la vitesse présélectionnée qui est choisie par le dispositif de contrôle D peut être soit la vitesse supérieure (quand c'est possible), soit la vitesse inférieure (éventuellement la marche arrière).

Dans la seconde alternative, lorsque la première vitesse présélectionnée est l'une des vitesses de marche avant, la seconde vitesse présélectionnée qui doit être choisie par le dispositif de contrôle D peut être la vitesse qui est inférieure à cette première vitesse présélectionnée, ou bien la vitesse qui est supérieure à cette première vitesse présélectionnée, ou encore la marche arrière.

Le procédé de contrôle peut être mis en oeuvre d'au moins deux façons différentes.

Dans une première mise en oeuvre ne correspondant pas à l'invention revendiquée et illustrée par l'algorithme de la figure 2, on peut effectuer une première étape 10 dans laquelle on effectue une mesure de la fréquence indésirable (ou du régime correspondant). Cette mesure peut, par exemple, être effectuée et fournie périodiquement par un capteur de fréquences qui est implanté en un endroit choisi du moteur thermique MT ou bien par un capteur de rotation qui est couplé à l'arbre d'entrée AP.

Ensuite, le dispositif de contrôle D (et plus précisément ses moyens de contrôle MC) peu(ven)t effectuer une deuxième étape 20 dans laquelle il(s) compare(nt) la (dernière) mesure de la fréquence indésirable (ou du régime correspondant) à une valeur stockée qui est représentative du mode fréquentiel (ou du régime correspondant) en cours de la boîte de vitesses BV (qui est connu par ailleurs à chaque instant).

Comme illustré non limitativement sur la figure 1, le dispositif de contrôle D peut comporter des moyens de stockage MS dans lequel il stocke des valeurs représentatives de différents modes fréquentiels (ou régimes) de la boîte de vitesses BV en correspondance d'identifiants de modes de fonctionnement de cette dernière (BV). A titre d'exemples purement illustratifs, un premier mode fréquentiel peut correspondre à un premier mode de fonctionnement dans lequel la première vitesse est enclenchée mais aucune vitesse n'est présélectionnée, un deuxième mode fréquentiel peut correspondre à un deuxième mode de fonctionnement dans lequel la première vitesse est enclenchée et la deuxième vitesse est présélectionnée, un troisième mode fréquentiel peut correspondre à un troisième mode de fonctionnement dans lequel la première vitesse est enclenchée et la marche arrière est présélectionnée, un quatrième mode fréquentiel peut correspondre à un quatrième mode de fonctionnement dans lequel la marche arrière est enclenchée mais aucune vitesse n'est présélectionnée, et un cinquième mode fréquentiel peut correspondre à un cinquième mode de fonctionnement dans lequel la marche arrière est enclenchée et la première vitesse est présélectionnée, etc.

Si le résultat de la comparaison effectuée lors de la deuxième étape 20 indique que la (dernière) mesure de la fréquence indésirable (ou du régime correspondant) n'est pas similaire à la valeur stockée qui est représentative du mode fréquentiel (ou du régime correspondant) en cours de la boîte de vitesses BV, alors le dispositif de contrôle D (et plus précisément ses moyens de contrôle MC) peu(ven)t effectuer une troisième étape 30 dans laquelle il(s) décide(nt) de ne pas modifier le fonctionnement du mécanisme de présélection de vitesse MP.

En revanche, si le résultat de la comparaison effectuée lors de la deuxième étape 20 indique que la (dernière) mesure de la fréquence indésirable (ou du régime correspondant) est similaire à la valeur stockée qui est représentative du mode fréquentiel (ou du régime correspondant) en cours de la boîte de vitesses BV, alors le dispositif de contrôle D (et plus précisément ses moyens de contrôle MC) peu(ven)t effectuer une quatrième étape 40 dans laquelle il(s) choisit (choisissent) et déclenche(nt) une modification du fonctionnement du mécanisme de présélection de vitesse MP.

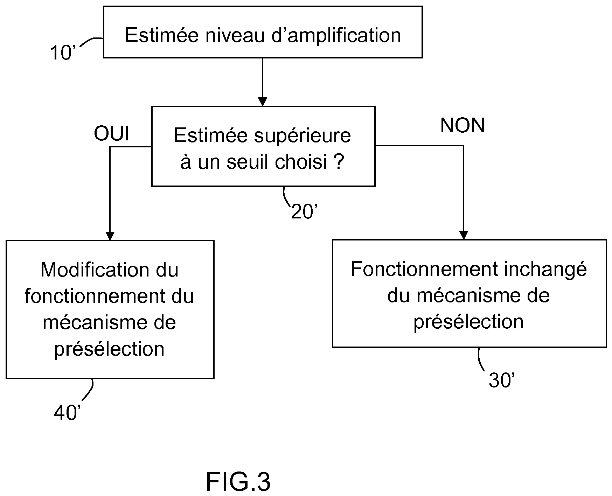

Dans une seconde mise en oeuvre correspondant à l'invention revendiquée et illustrée par l'algorithme de la figure 3, on peut effectuer une première étape 10' dans laquelle on estime le niveau d'amplification de la fréquence indésirable (ou du régime correspondant). Cette estimation peut, par exemple, être effectuée et fournie périodiquement par un capteur d'intensité sonore qui est implanté en un endroit choisi de la boîte de vitesses BV, par exemple au voisinage d'un pignon. L'estimée est par exemple déterminée par rapport à une intensité de référence connue en l'absence d'amplification (pour la fréquence considérée).

En variante, le capteur peut n'effectuer que les mesures d'intensité sonore, et c'est le dispositif de contrôle D qui estime chaque niveau d'amplification d'une fréquence indésirable (ou du régime correspondant) en fonction de la mesure d'intensité sonore reçue et d'une intensité de référence connue en l'absence d'amplification (pour la fréquence considérée).

Ensuite, le dispositif de contrôle D (et plus précisément ses moyens de contrôle MC) peu(ven)t effectuer une deuxième étape 20' dans laquelle il(s) compare(nt) la (dernière) estimée du niveau d'amplification de la fréquence indésirable (ou du régime correspondant) à un seuil choisi (éventuellement fonction de la fréquence considérée).

Si le résultat de la comparaison effectuée lors de la deuxième étape 20' indique que la (dernière) estimée est inférieure ou égale au seuil choisi, alors le dispositif de contrôle D (et plus précisément ses moyens de contrôle MC) peu(ven)t effectuer une troisième étape 30' dans laquelle il(s) décide(nt) de ne pas modifier le fonctionnement du mécanisme de présélection de vitesse MP.

En revanche, si le résultat de la comparaison effectuée lors de la deuxième étape 20' indique que la (dernière) estimée est supérieure au seuil choisi, alors le dispositif de contrôle D (et plus précisément ses moyens de contrôle MC) peu(ven)t effectuer une quatrième étape 40' dans laquelle il(s) choisit (choisissent) et déclenche(nt) une modification du fonctionnement du mécanisme de présélection de vitesse MP.

L'invention offre plusieurs avantages, et notamment :
- lorsque le moteur thermique est la source d'une fréquence indésirable, elle permet d'optimiser les réglages de combustion du moteur thermique en levant certaines contraintes acoustiques imposées par l'utilisation de moyens d'amortissement acoustique additionnels,
- lorsque le couplage via l'embrayage est la source d'une fréquence indésirable, elle permet de libérer des contraintes sur les tolérances de réalisation des pièces qui participent à ce couplage (tolérances sur les faux parallélismes de friction, tolérances sur les voiles de plateau de friction, tolérances sur les voiles de « becs de diaphragme », tolérance sur les désaxages moteur thermique/boîte de vitesses), et donc de réduire les coûts de fabrication de ces pièces.

## Revendications

1. Procédé de contrôle pour un véhicule (V) à groupe motopropulseur comportant une boîte de vitesses (BV) à mécanisme de présélection de vitesse (MP) et présentant un mode fréquentiel de fonctionnement variable, consistant en ce que, lorsque ledit groupe motopropulseur génère une fréquence indésirable amplifiée par un mode fréquentiel en cours de ladite boîte de vitesses (BV), à modifier le fonctionnement dudit mécanisme de présélection de vitesse (MP) afin de déplacer ledit mode fréquentiel en cours et **caractérisé en ce que** l'on effectue une comparaison entre une estimée d'un niveau d'amplification de ladite fréquence indésirable et un seuil choisi, et l'on modifie le fonctionnement dudit mécanisme de présélection de vitesse (MP) lorsque ladite estimée est supérieure audit seuil choisi.

2. Procédé selon la revendication 1, **caractérisé en ce que** ladite modification consiste soit en une présélection d'une vitesse choisie par ledit mécanisme de présélection de vitesse (MP) lorsqu'aucune vitesse n'est présélectionnée par ledit mécanisme de présélection de vitesse (MP), soit en un changement de vitesse présélectionnée si une première vitesse est déjà présélectionnée par ledit mécanisme de présélection de vitesse (MP).

3. Procédé selon l'une des revendications 1 et 2, **caractérisé en ce qu'**en présence d'une première vitesse présélectionnée différente de la marche arrière, on présélectionne une seconde vitesse qui est choisie dans un groupe comprenant au moins une vitesse inférieure à ladite première vitesse présélectionnée, une vitesse supérieure à ladite première vitesse présélectionnée, et ladite marche arrière.

4. Dispositif de contrôle (D) pour un véhicule (V) à groupe motopropulseur comportant une boîte de vitesses (BV) à mécanisme de présélection de vitesse (MP) et présentant un mode fréquentiel de fonctionnement variable, comprenant des moyens de contrôle (MC) agencés, en cas de génération par ledit groupe motopropulseur d'une fréquence indésirable amplifiée par un mode fréquentiel en cours de ladite boîte de vitesses (BV), pour déclencher une modification du fonctionnement dudit mécanisme de présélection de vitesse (MP) afin de déplacer ledit mode fréquentiel en cours et **caractérisé en ce que** lesdits moyens de contrôle (MC) sont agencés pour modifier le fonctionnement dudit mécanisme de présélection de vitesse (MP) lorsqu'une estimée d'un niveau d'amplification de ladite fréquence indésirable est supérieure à un seuil choisi.

5. Dispositif selon la revendication 4, **caractérisé en ce que** lesdits moyens de contrôle (MC) sont agencés pour déclencher soit une présélection d'une vitesse choisie par ledit mécanisme de présélection de vitesse (MP) lorsqu'aucune vitesse n'est présélectionnée par ledit mécanisme de présélection de vitesse (MP), soit une présélection d'une seconde vitesse choisie par ledit mécanisme de présélection de vitesse (MP) lorsqu'une première vitesse est présélectionnée par ledit mécanisme de présélection de vitesse (MP).

6. Véhicule (V) comprenant un groupe motopropulseur comportant une boîte de vitesses (BV) à mécanisme de présélection de vitesse (MP) et présentant un mode fréquentiel de fonctionnement variable, **caractérisé en ce qu'**il comprend un dispositif de contrôle (D) selon l'une des revendications 4 et 5.

## Patentansprüche

1. Steuerverfahren für ein Fahrzeug (V) eines Antriebsaggregats, das ein Schaltgetriebe (BV) mit Gangvorwahlmechanismus (MP) umfasst und einen variablen Betriebsfrequenzmodus aufweist, der darin besteht, dass, wenn das Antriebsaggregat eine unerwünschte Frequenz erzeugt, die von einem aktuellen Frequenzmodus des Schaltgetriebes (BV) verstärkt wird, der Betrieb des Gangvorwahlmechanismus (MP) geändert wird, um den aktuellen Frequenzmodus zu verlagern, und **dadurch gekennzeichnet, dass** man einen Vergleich zwischen einem Schätzwert eines Verstärkungspegels der unerwünschten Frequenz und einem ausgewählten Schwellenwert ausführt, und dass man den Betrieb des Gangvorwahlmechanismus (MP) ändert, wenn der Schätzwert größer ist als der ausgewählte Schwellenwert.

2. Verfahren nach Anspruch 1, **dadurch gekennzeichnet, dass** die Änderung entweder in einer Vorauswahl eines Gangs, der von dem Gangvorwahlmechanismus (MP) ausgewählt wird, wenn kein Gang durch den Gangvorwahlmechanismus (MP) ausgewählt wird, oder aus einem vorausgewählten Gangwechsel besteht, wenn ein erster Gang bereits von dem Gangvorwahlmechanismus (MP) ausgewählt ist.

3. Verfahren nach einem der Ansprüche 1 und 2, **dadurch gekennzeichnet, dass** man bei Vorliegen eines ersten vorausgewählten Gangs, der von dem Rückwärtsgang unterschiedlich ist, einen zweiten Gang vorauswählt, der aus der Gruppe, die mindestens einen Gang umfasst, der niedriger ist als der erste vorausgewählte Gang, einen Gang, der höher ist als der erste vorausgewählte Gang und den Rückwärtsgang ausgewählt wird.

4. Steuervorrichtung (D) eines Fahrzeugs (V) mit Antriebsaggregat, das ein Schaltgetriebe (BV) mit Gangvorwahlmechanismus (MP) umfasst und einen variablen Betriebsfrequenzmodus umfasst, die Steuermittel (MC) aufweist, die im Fall einer Erzeugung durch das Antriebsaggregat einer unerwünschten Frequenz, die von einem aktuellen Frequenzmodus des Schaltgetriebes (BV) verstärkt wird, eine Änderung des Betriebs des Gangvorwahlmechanismus (MP) auslöst, um den aktuellen Frequenzmodus zu verlagern, und **dadurch gekennzeichnet, dass** die Steuermittel (MC) eingerichtet sind, um den Betrieb des Gangvorwahlmechanismus (MP) zu ändern, wenn ein Schätzwert eines Verstärkungspegels der unerwünschten Frequenz höher ist als ein ausgewählter Schwellenwert.

5. Vorrichtung nach Anspruch 4, **dadurch gekennzeichnet, dass** die Prüfmittel (MC) eingerichtet sind, um entweder eine Vorauswahl eines Gangs, der von dem Gangvorwahlmechanismus (MP) ausgewählt wird, wenn kein Gang von dem Gangvorwahlmechanismus (MP) ausgewählt ist, oder eine Vorauswahl eines zweiten Gangs, der durch den Gangvorwahlmechanismus (MP) ausgewählt wird, wenn ein erster Gang von dem Gangvorwahlmechanismus (MP) ausgewählt wird, auszulösen.

6. Fahrzeug (V), das ein Antriebsaggregat umfasst, das ein Schaltgetriebe (BV) mit Gangvorwahlmechanismus (MP) aufweist, und einen variablen Betriebsfrequenzmodus aufweist, **dadurch gekennzeichnet, dass** es eine Steuervorrichtung (D) nach einem der Ansprüche 4 und 5 umfasst.

## Claims

1. A controlling method for a vehicle (V) having a power train that comprises a gearbox (BV) having a speed preselection mechanism (MP) and having a variable operational frequency mode, consisting in that when said power train generates an undesirable frequency amplified by a frequency mode of said gearbox (BV) that is running, to modify the operation of said speed preselection method (MP) so as to shift said frequency mode that is running and **characterized in that** a comparison is carried out between an estimation of an amplification level of said undesirable frequency and a selected threshold, and the operation of said speed preselection mechanism (MP) is modified when said estimation is greater than said selected threshold.

2. The method according to Claim 1, **characterized in that** said modification consists either in a preselection of a speed selected by said speed preselection mechanism (MP) when no speed is preselected by said speed preselection mechanism (MP), or in a preselected speed change if a first speed is already preselected by said speed preselection mechanism (MP).

3. The method according to one of Claims 1 and 2, **characterized in that** in the presence of a first preselected speed different from the reverse gear, a second speed is preselected, which is selected from a group including at least one speed lower than said first preselected speed, a speed greater than said first preselected speed, and said reverse gear.

4. A control device (D) for a vehicle (V) having a power train that comprises a gearbox (BV) having a speed preselection mechanism (MP) and having a variable operational frequency mode, including control means (MC) arranged, in the case of generation by said power train of an undesirable frequency amplified by a gearbox (BV) frequency mode that is running, to trigger a modification of the operation of said speed preselection mechanism (MP) so as to shift said frequency mode that is running and **characterized in that** said control means (MC) are arranged so as to modify the operation of said speed preselection mechanism (MP) when an estimation of an amplification level of said undesirable frequency is greater than a selected threshold.

5. The device according to Claim 4, **characterized in that** said control means (MC) are arranged so as to trigger either a preselection of a speed selected by said speed preselection mechanism (MP) when no speed is preselected by said speed preselection mechanism (MP), or a preselection of a second speed selected by said speed preselection mechanism (MP) when a first speed is preselected by said speed preselection mechanism (MP).

6. A vehicle (V) including a power train comprising a gearbox (BV) having a speed preselection mechanism (MP) and having a variable operational frequency mode, **characterized in that** it includes a control device (D) according to one of Claims 4 and 5.
